# EUROPÄISCHE PATENTANMELDUNG

(11) **EP 2 801 482 A1**
(43) Veröffentlichungstag der Anmeldung: **12.11.2014**
(21) Anmeldenummer: 14160207.8
(22) Anmeldetag: 17.03.2014
(51) Int. Cl.: B44C 3/08, B29C 51/26, B44C 5/04, B29C 67/00, E04F 15/02

(54) **Verfahren zur Bearbeitung einer Kunststeinplatte und Kunststeinplatte**

(30) Priorität: 30.04.2013 DE 102013207974
(71) Anmelder: Georg Ackermann GmbH, 97355 Wiesenbronn (DE)
(72) Erfinder: Bart, Alexander, 97353 Wiesentheid (DE)
(74) Vertreter: advotec.

(57) **Zusammenfassung**

Die Erfindung betrifft eine Kunststeinplatte (02) aus einem Verbundwerkstoff, wobei der Verbundwerkstoff im Wesentlichen aus einer polymeren Bindungsmatrix und einem mineralischen Füllstoff aufgebaut ist, sowie dessen Herstellungsverfahren, wobei ein begrenzter Konturbereich (04) entlang zumindest eines Konturschnitts (03) bis auf zumindest eine Verbindungsstelle (05) vom umgebenden Außenbereich (06) dergestalt getrennt und geformt ist, dass der begrenzte Konturbereich (04) erhaben über dem umgebenden Außenbereich (06) übersteht.

## Beschreibung

Die Erfindung betrifft ein Verfahren zur Bearbeitung einer Kunststeinplatte und eine so hergestellte Kunststeinplatte nach der Lehre der unabhängigen Hauptansprüche.

Bei den hier in Rede stehenden Kunststeinplatten, wie sie aus dem Stand der Technik bekannt sind, handelt es sich um einen Verbundwerkstoff, der im Wesentlichen aus einer polymeren Bindungsmatrix und einem darin eingebetteten mineralischen Füllstoff aufgebaut ist. Struktur, Aussehen und Eigenschaften des Kunststeinplattenmaterials können durch Variation der Bindungsmatrix bzw. des mineralischen Füllstoffs sehr gut variiert werden. Solche Kunststeinplatten weisen eine sehr gute und praktisch porenfreie Oberflächenbeschaffenheit und eine hohe Resistenz gegen Chemikalien, insbesondere Säuren, auf. Außerdem zeichnen sie sich dadurch aus, dass sie anders als natürliches Steinmaterial mit Holzbearbeitungswerkzeugen bearbeitet werden können. So lassen sich die Kunststeinplatten sehr einfach bohren, fräsen, schneiden oder abhobeln. Aufgrund dieser guten Verarbeitbarkeit der Kunststeinplatten werden sie in vielen unterschiedlichen Anwendungsbereichen eingesetzt. So werden Kunststeinplatten als Fassadenverkleidungen, Innenverkleidungen, in der Gastronomie oder im Ladenbau eingesetzt. Insbesondere auch bei der Einrichtung von Laboren und im Gesundheitswesen finden solche eine breite Anwendung, da sie sehr gute hygienische Eigenschaften aufweisen. Auch im Sanitärbereich sind verschiedenste Einsatzbereiche des Kunststeins bekannt. Auch werden zunehmend Beleuchtungseinrichtungen aus Kunststeinprodukten hergestellt, da das Material je nach Einfärbung translucent ist und ungewöhnliche Beleuchtungseffekte ermöglicht.

Aus der EP 1553 063 A1, der WO 01/39959 A1, der DE 43 42 412 C2 und der DE 80 07 975 U1 sind Kunststeinplatten und diverse Bearbeitungsverfahren zur Bearbeitung von Kunststeinplatten bekannt. Die dort beschriebenen Kunststeinplatten können auch als hinterleuchtete Bauteile in einer Beleuchtungseinrichtung zum Einsatz kommen.

Nachteilig an den bekannten Anwendungen der Kunststeinplatten ist es, dass die zweidimensionale Plattenstruktur der Kunststeinplatten nur geringe Gestaltungsmöglichkeiten ermöglicht.

Aufgabe der vorliegenden Erfindung ist es deshalb ein Verfahren zur Bearbeitung von Kunststeinplatten vorzuschlagen, mit dem neue Gestaltungsmöglichkeiten geschaffen werden. Weiter ist es Aufgabe der vorliegenden Erfindung eine Kunststeinplatte mit entsprechenden Gestaltungsmerkmalen vorzuschlagen.

Diese Aufgaben werden durch ein Verfahren und eine Kunststeinplatte nach der Lehre der unabhängigen Hauptansprüche gelöst.

Vorteilhafte Ausführungsformen der Erfindung sind Gegenstand der Unteransprüche.

Das erfindungsgemäße Verfahren ist zunächst einmal dadurch charakterisiert, dass an der Kunststeinplatte ein Konturschnitt angebracht wird. Die Schnittfuge dieses Konturschnitts durchtrennt die Kunststeinplatte über die volle Plattendicke, so dass sich zwei Schnittufer gegenüberliegen. Der Konturschnitt wird dabei so geführt, dass die Kunststeinplatte nicht in zwei Teile getrennt wird. Stattdessen wird durch den Konturschnitt ein Konturbereich begrenzt, der an zumindest einer Verbindungsstelle mit dem den Konturbereich umgebenden Außenbereich der Kunststeinplatte verbunden bleibt. Die Geometrie des Konturschnitts kann somit ein bestimmtes Motiv als Konturbereich definieren, soweit dies gewünscht wird.

Im zweiten Schritt wird dann die Verbindungsstelle zwischen Konturbereich und Außenbereich der Kunststeinplatte bis zur Erweichungstemperatur des Verbundwerkstoffs erwärmt. Nach Überschreiten der Erweichungstemperatur kann das Kunststeinplattenmaterial ohne Reißen der Plattenoberfläche plastisch verformt werden.

Während des Verfahrensschritts zur plastischen Verformung der Verbindungsstelle wird so vorgegangen, dass der vom Konturschnitt begrenzte Konturbereich nach der Verformung zumindest auf einer Seite der Kunststeinplatte zumindest teilweise über die Plattenebene des umgebenden Außenbereichs übersteht. Im Ergebnis wird also durch die plastische Verformung der Verbindungsstelle eine dreidimensionale Bauteilstruktur erreicht, bei der der Konturbereich über die Plattenebene übersteht.

Im letzten Schritt wird die Kunststeinplatte dann abgekühlt und dadurch die Verformung der Verbindungsstelle fixiert.

Durch das erfindungsgemäße Verfahren werden die Gestaltungsmöglichkeiten zur Gestaltung von Kunststeinplatten erheblich erweitert. Insbesondere können durch das erfindungsgemäße Verfahren Kunststeinplatten hergestellt werden, die eine dreidimensionale Bauteilstruktur aufweisen und nicht auf die plattenförmige Bauteilstruktur der Kunststeinplatte begrenzt sind.

In welcher Weise der Konturschnitt an der Kunststeinplatte angebracht wird, ist grundsätzlich beliebig. Beispielsweise kann dies mit spanabhebenden Fertigungsverfahren, beispielsweise durch Fräsen oder Bandsägen erfolgen. Besonders feine und filigrane Bauteilstrukturen können hergestellt werden, wenn der Konturschnitt durch Laserstrahlschneiden oder Wasserstrahlschneiden angebracht wird.

Die erfindungsgemäße Kunststeinplatte ist dadurch charakterisiert, dass die Verbindungsstelle zwischen dem durch den Konturschnitt begrenzten Konturbereich und dem umgebenden Außenbereich der Kunststeinplatte eine Verformung aufweist, so dass der Konturbereich zumindest auf einer Seite der Kunststeinplatte über die Plattenebene übersteht und dadurch eine dreidimensionale Bauteilstruktur ergibt.

Wie weit der Überstand des über die Plattenebene überstehenden Konturbereichs reicht, ist grundsätzlich beliebig. Besonders vorteilhaft ist es jedoch, wenn der maximale Überstand des über die Oberfläche der Kunststeinplatte überstehenden Konturbereichs dünner als die Plattendicke der Kunststeinplatte ist. Auf diese Weise ist gewährleistet, dass die Öffnungen zwischen Konturbereich und Außenbereich nie breiter als die Schnittfuge des Konturschnitts sind. Wird ein geeignetes Schneidverfahren, beispielsweise Laserstrahlschneiden oder Wasserstrahlschneiden eingesetzt, so können im Ergebnis Bauteile mit nur sehr kleinen, spaltförmigen Öffnungen zwischen dem Konturbereich und dem Außenbereich hergestellt werden. Dies ist insbesondere bei Verwendung der Kunststeinplatte im Bereich von Beleuchtungen von großer Bedeutung.

Die materialmäßige Zusammensetzung der Kunststeinplatte ist ebenfalls grundsätzlich beliebig. Der Gewichtsanteil der Bindungsmatrix im Verbundwerkstoff der Kunststeinplatte sollte bevorzugt im Bereich von 10% bis 95 %, insbesondere im Bereich von 25 % bis 75 %, liegen, um einerseits eine ausreichende plastische Verformbarkeit der Kunststeinplatte und andererseits eine ausreichende mechanische Stabilität zu gewährleisten. Bei einem Gewichtsanteil der Bindungsmatrix nahe 100% und Verwendung eines transparenten Kunststoffs, beispielsweise Polymethylmetacrylat, lassen sich beinahe transparente, hoch lichtdurchlässige Bauteile mit dem erfindungsgemäßen Verfahren herstellen.

Um eine rationelle Fertigung der erfindungsgemäßen Kunststeinplatten zu gewährleisten, sollte die Dicke der Kunststeinplatte bevorzugt im Bereich von 3 mm bis 30 mm liegen. Die Breite der Kunststeinplatte sollte bevorzugt im Bereich bis zu 2050 mm und die Länge der Kunststeinplatte bevorzugt im Bereich bis 4000 mm liegen.

Als polymere Bindungsmatrix für die Kunststeinplatte hat sich insbesondere Polymethylmetacrylat bewährt. Dieses Material hat im Hinblick auf das erfindungsgemäße Verfahren insbesondere den Vorteil, dass es sehr gut mit Laserstrahlschneidverfahren durchtrennt werden kann.

Der mineralische Füllstoff im Verbundwerkstoff sollte bevorzugt aus Aluminiumhydroxid bestehen. Auch dieses Material kann sehr gut mit Laserstrahlschneidverfahren durchtrennt werden.

Die erfindungsgemäßen Gestaltungsmöglichkeiten von Kunststeinplatten lassen sich in vielen Anwendungsbereichen einsetzen. Von großer Bedeutung sind diese neuen Gestaltungsmöglichkeiten insbesondere bei Beleuchtungskörpern. Gemäß einer bevorzugten Variante ist es deshalb vorgesehen, dass die Kunststeinplatte lichtdurchlässig ist.

Um bestimmte Farbeffekte zu erreichen, kann die Kunststeinplatte mit Farbpigmenten eingefärbt werden. Auch dies ist insbesondere dann von großer Bedeutung, wenn die Kunststeinplatte in einen Beleuchtungskörper eingebaut wird.

Gemäß einer weiteren Variante ist es vorgesehen, dass die Kunststeinplatte an zumindest einer Oberfläche zumindest bereichsweise bedruckt ist.

Die mit dem erfindungsgemäßen Verfahren angebrachten Konturschnitte bedeuten Öffnungen in der Kunststeinplatte, durch die das Licht ungehindert hindurchtreten kann. Falls ein solch ungehinderter Lichtdurchtritt unerwünscht ist, kann auf einer Seite der Kunststeinplatte, nämlich auf der Seite auf der die Konturbereiche nicht über der Plattenebene überstehen, zusätzlich eine Folien- oder Plattenschicht angebracht werden, die die Schnittfugen verschließt. Diese zusätzliche Folien- oder Plattenschicht sollte bevorzugt lichtdurchlässig und/oder eingefärbt sein.

Für welchen Anwendungszweck die erfindungsgemäße Kunststeinplatte eingesetzt wird, ist grundsätzlich beliebig. Besonders große Vorteile bieten die erfindungsgemäßen Gestaltungsmöglichkeiten im Bereich der Lichttechnik. Deshalb ist es gemäß einer bevorzugten Variante vorgesehen, dass die Kunststeinplatte die Sichtseite eines Leuchtschirms bildet. Auf der gegenüberliegenden Seite der Kunststeinplatte wird dann ein Leuchtmittel zur Hinterleuchtung des Leuchtschirms angebracht. Durch die Schnittfugen und die überstehenden Konturbereiche können überraschende Beleuchtungseffekte erzielt werden, wie sie beispielsweise im Messe- und Ladenbau von großer Bedeutung sind.

Das erfindungsgemäße Verfahren verwendet Kunststeinplatten, die sehr gut fugenlos miteinander verklebt werden können. Insofern können die mit dem erfindungsgemäßen Verfahren bearbeiteten Kunststeinplatten nach dem Verformen sehr gut an den Seitenkanten fugenlos miteinander verklebt werden, um so unter Verwendung mehrerer jeweils einzeln bearbeiteter Kunststeinplatten ein komplexes und integrales Kunststeinbauteil zu bilden. Insbesondere größere Leuchtschirme können auf diese Weise hergestellt werden.

Eine Ausführungsform der Erfindung ist in den Zeichnungen schematisch dargestellt und wird nachfolgend beispielhaft erläutert.

Es zeigen:
- Fig. 1: einen Leuchtschirm bestehend aus mehreren Kunststeinplatten, die mit dem erfindungsgemäßen Verfahren bearbeiten wurden;
- Fig. 2: eine Kunststeinplatte zur Herstellung des Leuchtschirms gemäß Fig. 1 in vergrößerter Darstellung;
- Fig. 3: die Kunststeinplatte gemäß Fig. 2 nach Anbringung des Konturschnitts und vor der Verformung im Teilquerschnitt;
- Fig. 4: die Kunststeinplatte gemäß Fig. 3 während der Erwärmung der Verbindungsstelle;
- Fig. 5: die Kunststeinplatte gemäß Fig. 4 nach Verformung der Verbindungsstelle;
- Fig. 6: die Kunststeinplatte gemäß Fig. 5 nach Anbringung einer zusätzlichen lichtdurchlässigen Plattenschicht zur Bildung eines Leuchtschirms.

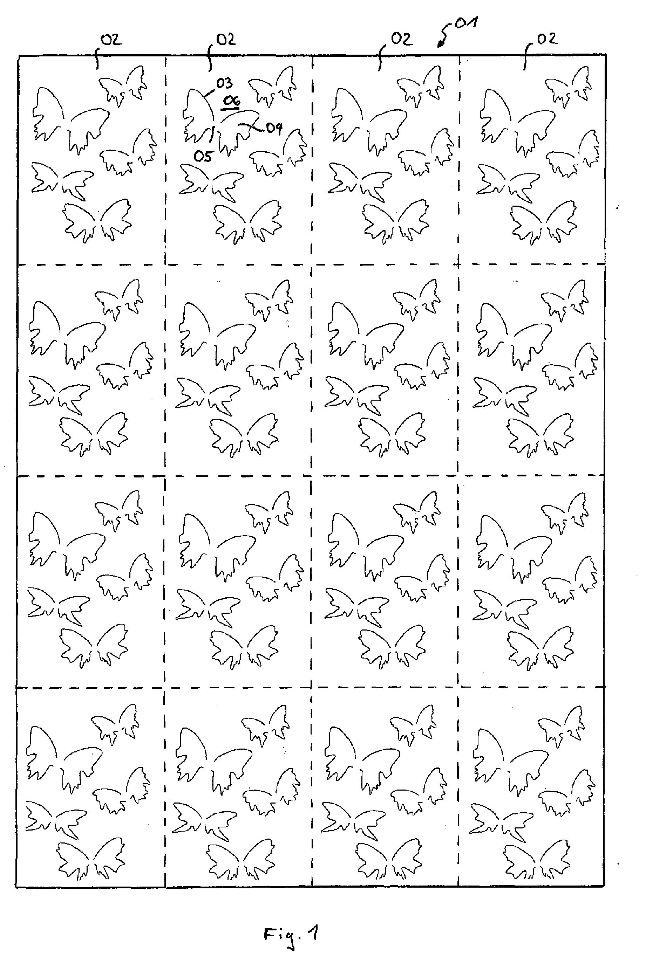

Fig. 1 zeigt einen Leuchtschirm 01 in Ansicht von vorne. Der Leuchtschirm 01 besteht aus 16 Kunststeinplatten 02, die baugleich ausgebildet sind und die an ihren Seitenkanten zur Bildung des Leuchtschirms 01 fugenlos miteinander verklebt sind. Das mineralische Verbundmaterial der Kunststeinplatten 02 ist dabei teiltransparent, so dass Licht durch die Kunststeinplatten 02 hindurch scheinen kann.

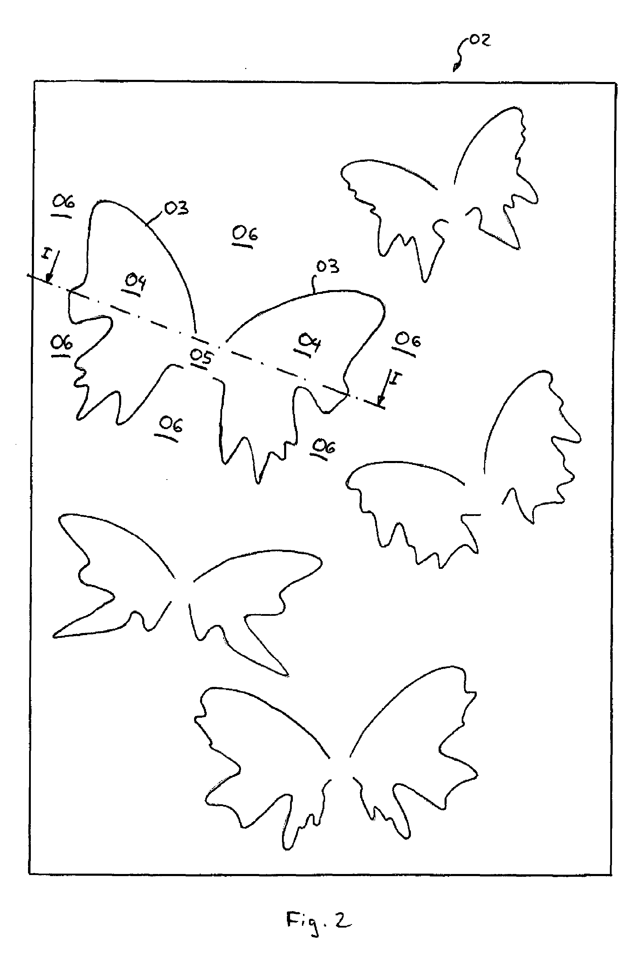

Fig. 2 zeigt eine Kunststeinplatte 02 des Leuchtschirms 01 in vergrößerter Ansicht. In die Kunststeinplatte 02 sind als graphisches Gestaltungsmotiv jeweils fünf schematisierte Schmetterlinge eingearbeitet. Zur Darstellung des Schmetterlingsmotivs werden in die Kunststeinplatte jeweils zwei Konturschnitte 03 mittels eines Laserschneidverfahrens eingearbeitet. Der Verlauf der Konturschnitte entspricht dabei der Form der Schmetterlingsflügel. Die Konturschnitte 03 begrenzen dabei jeweils einen der Flügelform des Schmetterlings entsprechenden Konturbereich 04, der über eine Verbindungsstelle 05 mit dem umgebenden Außenbereich 06 verbunden ist. Durch die Verbindungsstelle 05 wird also verhindert, dass die gewählte Motivform vollständig aus der Kunststeinplatte herausgetrennt wird.

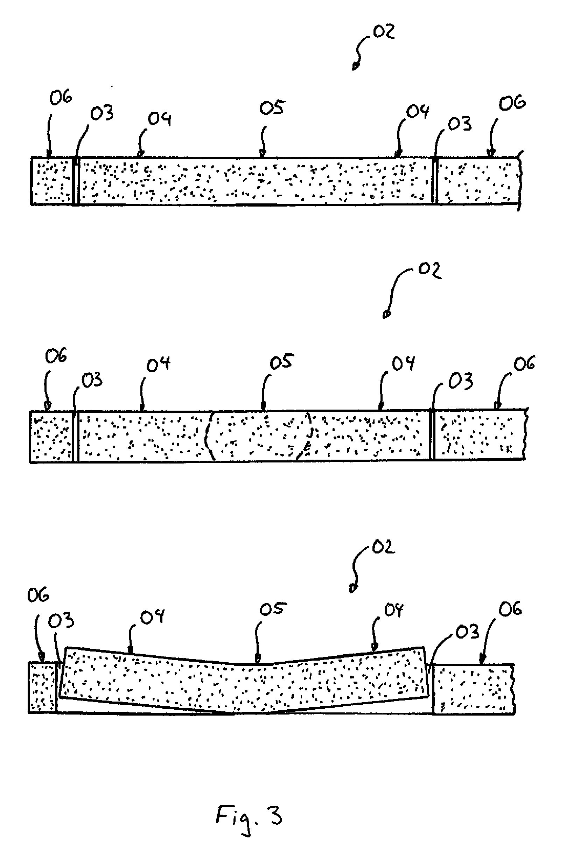

Fig. 3 zeigt die Kunststeinplatte 02 im Teilquerschnitt entlang der Schnittlinie I-I nach Anbringung der Konturschnitte 03. Die Kunststeinplatte 02 weist dabei zunächst eine im Wesentlichen zweidimensionale Bauteilstruktur auf, bei der kein Bestandteil der Kunststeinplatte aus der Plattenebene herausragt.

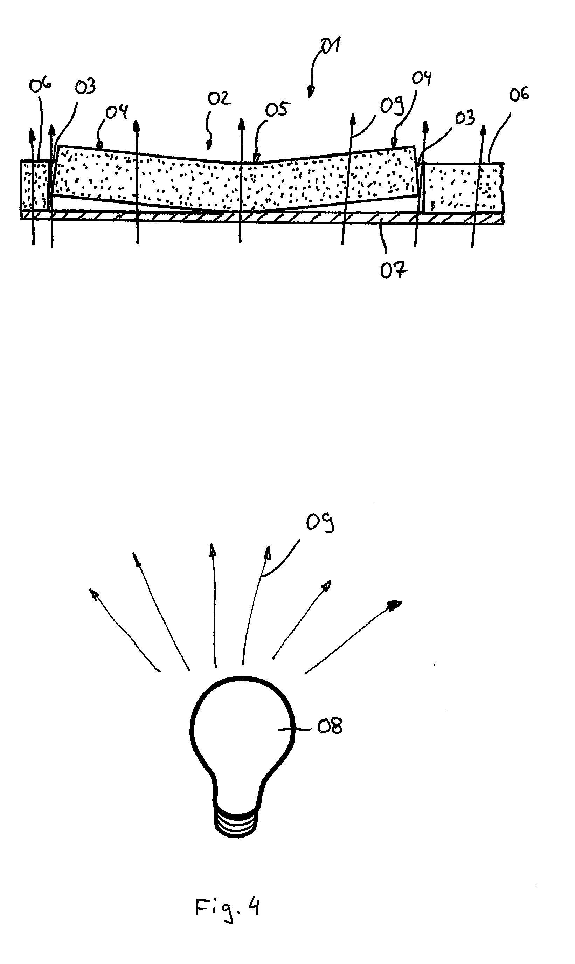

Wie in Fig. 4 angedeutet wird nach Anbringung der Konturschnitte 03 die Verbindungsstelle 05 soweit erwärmt, bis die Erweichungstemperatur des Verbundwerkstoffs überschritten ist.

Anschließend wird, wie in Fig. 5 angedeutet die Verbindungsstelle 05 soweit verformt, dass die Konturbereiche 04 mit ihren Kanten über die Plattenebene überstehen und somit eine räumliche dreidimensionale Bauteilstruktur gebildet wird.

Fig. 6 zeigt einen Teilquerschnitt durch den Leuchtschirm 01. Man erkennt, dass zur Bildung des Leuchtschirms 01 auf der Rückseite der Kunststeinplatten 02 zusätzlich eine farbige lichttransparente Plattenschicht 07 angebracht wird. Bei Hinterleuchtung des Leuchtschirms 01 mit einem Leuchtmittel 08 kann das Licht 09 aufgrund der Transparenz der Kunststeinplatten 02 und der Plattenschicht 07 überall durch den Leuchtschirm 01 durchtreten. Die Beleuchtungsstärke ist dabei im Bereich der Konturschnitte 03 höher, da das Licht in diesem Bereich die Kunststeinplatte 02 selbst nicht durchstrahlen muss. Durch diesen Effekt können interessante Beleuchtungsvarianten realisiert werden, bei denen der Leuchtschirm dreidimensional wirkt und einen interessanten Schattenwurf aufweist.

## Patentansprüche

1. Verfahren zur Bearbeitung einer Kunststeinplatte (02), wobei die Kunststeinplatte (02) aus einem Verbundwerkstoff besteht, und wobei der Verbundwerkstoff im Wesentlichen aus einer polymeren Bindungsmatrix und einem mineralischen Füllstoff aufgebaut ist,
mit folgenden Verfahrensschritten:
a) Herstellung zumindest eines Konturschnitts (03) in der Kunststeinplatte (02), wobei die Schnittfuge die Plattendicke der Kunststeinplatte (02) entlang des Konturschnitts (03) vollständig durchtrennt, und wobei der vom Konturschnitt (03) begrenzte Konturbereich (04) an zumindest einer Verbindungsstelle (05) mit dem den Konturbereich (04) umgebenden Außenbereich (06) der Kunststeinplatte (02) verbunden bleibt;
b) Erwärmung zumindest der Verbindungsstelle (05) bis zur Erweichungstemperatur, die eine plastische Verformung des Verbundwerkstoffs ermöglicht;
c) plastische Verformung der Verbindungsstelle (05), wobei der vom Konturschnitt (03) begrenzte Konturbereich (04) nach der Verformung in Richtung der Plattendicke zumindest teilweise über die Plattenebene des umgebenden Außenbereichs (06) übersteht;
d) Abkühlung der Kunststeinplatte (02).

2. Verfahren nach Anspruch 1,
**dadurch gekennzeichnet,**
**dass** der Konturschnitt (03) durch Laserstrahlschneiden oder Wasserstrahlschneiden an der Kunststeinplatte (02) angebracht wird.

3. Kunststeinplatte (02) aus einem Verbundwerkstoff, wobei der Verbundwerkstoff im Wesentlichen aus einer polymeren Bindungsmatrix und einem mineralischen Füllstoff aufgebaut ist,
**dadurch gekennzeichnet,**
**dass** die Kunststeinplatte (02) einen Konturschnitt (03) aufweist, wobei die Schnittfuge die Plattendicke der Kunststeinplatte (02) entlang des Konturschnitts (03) vollständig durchtrennt, und wobei der vom Konturschnitt (03) begrenzte Konturbereich (04) an zumindest einer plastische verformten Verbindungsstelle (05) mit dem den Konturbereich (04) umgebenden Außenbereich (06) der Kunststeinplatte (02) verbunden ist, so dass der vom Konturschnitt (03) begrenzte Konturbereich (04) in Richtung der Plattendicke zumindest teilweise über die Plattenebene des umgebenden Außenbereichs (06) übersteht.

4. Kunststeinplatte nach Anspruch 3,
**dadurch gekennzeichnet,**
**dass** der maximale Überstand des über die Plattenebene der Kunststeinplatte (02) überstehenden Konturbereichs (04) kleiner als die Plattendicke der Kunststeinplatte (02) ist.

5. Kunststeinplatte nach Anspruch 3 oder 4,
**dadurch gekennzeichnet,**
**dass** der Gewichtsanteil der Bindungsmatrix im Verbundwerkstoff der Kunststeinplatte (02) im Bereich von 10% bis 95 %, insbesondere im Bereich von 25 % bis 75 % liegt.

6. Kunststeinplatte nach einem der Ansprüche 3 bis 5,
**dadurch gekennzeichnet,**
**dass** die Kunststeinplatte (02) eine Dicke im Bereich von 3 mm bis 30 mm aufweist und/oder dass die Kunststeinplatte (02) eine Breite im Bereich bis 2050 mm aufweist und/oder dass die Kunststeinplatte (02) eine Länge im Bereich bis 4000 mm aufweist.

7. Kunststeinplatte nach einem der Ansprüche 3 bis 6,
**dadurch gekennzeichnet,**
**dass** die polymere Bindungsmatrix im Verbundwerkstoff der Kunststeinplatte (02) aus Polymethylmetacrylat besteht.

8. Kunststeinplatte nach einem der Ansprüche 3 bis 7,
**dadurch gekennzeichnet,**
**dass** der mineralische Füllstoff im Verbundwerkstoff der Kunststeinplatte (02) aus Aluminiumhydroxid besteht.

9. Kunststeinplatte nach einem der Ansprüche 3 bis 8,
**dadurch gekennzeichnet,**
**dass** die Kunststeinplatte (02) lichtdurchlässig ist.

10. Kunststeinplatte nach einem der Ansprüche 3 bis 9,
**dadurch gekennzeichnet,**
**dass** die Kunststeinplatte (02) mit Farbpigmenten eingefärbt ist.

11. Kunststeinplatte nach einem der Ansprüche 3 bis 10,
**dadurch gekennzeichnet,**
**dass** die Kunststeinplatte (02) an zumindest einer Oberfläche zumindest bereichsweise bedruckt ist.

12. Kunststeinplatte nach einem der Ansprüche 3 bis 11,
**dadurch gekennzeichnet,**
**dass** auf der Seite der Kunststeinplatte (02), auf der die Konturbereiche (04) nicht über die Plattenebene des umgebenden Außenbereichs (06) überstehen, zumindest bereichsweise eine zusätzliche Folien- oder Plattenschicht (07) angebracht ist, die die Schnittfugen zumindest bereichsweise verschließt.

13. Kunststeinplatte nach Anspruch 12,
**dadurch gekennzeichnet,**
**dass** die zusätzliche Folien- oder Plattenschicht (07) lichtdurchlässig ist und/oder eingefärbt ist.

14. Kunststeinplatte nach einem der Ansprüche 3 bis 13,
**dadurch gekennzeichnet,**
**dass** eine Seite der Kunststeinplatte (02) die Sichtseite eines Leuchtschirms (01) bildet, wobei auf der gegenüberliegenden Seite der Kunststeinplatte (02) ein Leuchtmittel (08) zur Hinterleuchtung des Leuchtschirms (01) angebracht ist.

15. Kunststeinplatte nach einem der Ansprüche 3 bis 14,
**dadurch gekennzeichnet,**
**dass** mehrere Kunststeinplatten (02), an denen jeweils zumindest ein überstehender Konturbereich vorgesehen ist, an den Seitenkanten fugenlos miteinander verklebt sind und gemeinsam ein integrales Kunststeinbauteil, insbesondere einen Leuchtschirm (01), bilden.
